# EUROPEAN PATENT APPLICATION

(11) **EP 1 162 820 A2**
(43) Date of publication of application: **12.12.2001**
(21) Application number: 01810519.7
(22) Date of filing: 28.05.2001
(51) Int. Cl.: H04N 1/00

(54) **System and method of managing image data in network**

(30) Priority: 09.06.2000 JP 2000172931
(71) Applicant: Kyocera Corporation, Kyoto-shi, Kyoto 612-8501 (JP)
(72) Inventor: Yamaguchi, Tetsuji, c/o Kyocera Corporation, Setagaya-ku, Tokyo 158-8610 (JP); Akamatsu, Hiromasa, c/o Kyocera Corporation, Setagaya-ku, Tokyo 158-8610 (JP)
(74) Representative: Liebetanz, Michael, Dipl.-Phys.

(57) **Abstract**

A system of managing image data in a network (10) comprises a scanner (1), a printer (5) and a client computer (3), each connected to the network (10). The printer (5) includes a storage section (52) for storing image data inputted by the scanner (1), and the client computer (3) manages the image data stored in the storage section (52) via the network (10). The system allows reductions in scale of the network system and its build-up cost.

## Description

The present invention relates to system and method of managing image data in a network, and in particular, to system and method of managing image data fetched by an image reader such as a scanner connected to a network without storing the image data in a network server.

### Description of the Related Art

In recent years, a network system such as a LAN (Local Area Network) or the like has been practically utilized. More specifically, in the network system, image data fetched by a scanner connected to a network is inspected by a computer connected to the network, and further, is printed out from a printer.

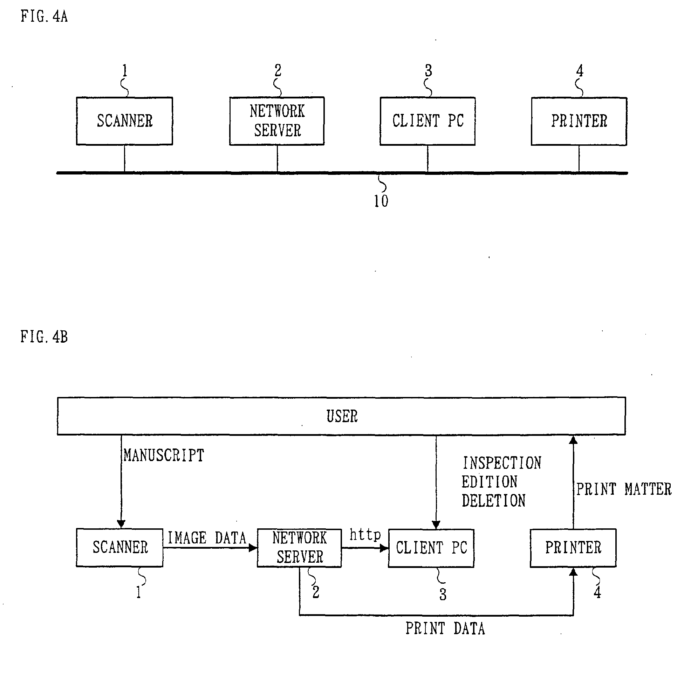

FIG. 4A is a block diagram showing the construction of a bus type LAN as an example of the above conventional network system.

As shown in FIG. 4A, in the network system, a network 10 is connected with a scanner 1, a network server 2, a client computer (PC) 3 and a printer 4. The network server 2 has a built-in software for managing (e.g., inspecting) image data in a HTML (Hyper Text Markup Language) format.

Next, a data flow of the above network system will be described below with reference to FIG. 4B.

Image data of manuscript scanned by the scanner 1 is transferred to the network server 2 via the network, and is stored therein. Then, when a user makes management operations of the image data, such as inspection, edition, deletion or the like, using a browser on a screen of the client PC 3, the image data is transferred from the network server 2 to the client PC 3 via the network. In this case, the image data is transferred by a http (Hyper Text Transfer Protocol) access.

Moreover, the user can instruct to print out the image data by using the client PC 3. In the case of printing out the image data, the image data is transferred as print data from the network server 2 to the printer 4. Then, the image data is printed out as a print matter by the printer 4.

An example of the above conventional network system has been disclosed in Japanese Patent Application Laid-Open No. 9-101993. According to this Publication, a scanner and a printer are connected to a network via a network server. Image data scanned by the scanner is stored in the network server.

In conventional network systems, for example, as shown in the above Publication, one or two or more dedicated network servers must be provided in order to merely store image data scanned by a scanner. The provision of network servers increase the scale of the network system, resulting in higher build-up cost.

Moreover, in conventional network systems, even if image data scanned by a scanner is a character image, the character image data is stored as binary data. When inspecting the character image data by using a client PC, the character image data is transferred as binary data. For this reason, when transferring the character image data, a large load acts on a network traffic, and in addition, much time is required to transfer the character image data.

The present invention has been made in order to solve the above problems. A first object of the present invention is to provide technique of managing image data in a network, which can reduce the scale of network system with low build-up cost.

Further, a second object of the present invention is to provide technique of managing image data in a network, which can reduce a load acting on a network traffic, and shorten time required to transfer character image data.
[1] In order to achieve the first object, according to a first aspect of the present invention, a system of managing image data in a network comprises an image input device, an image forming device and a client computer; the image forming device including a network interface for receiving image data inputted from the image input device, and storage means for storing the image data received by the network interface; and a client computer being arranged to manage the image data stored in the storage means via the network.
   In this system, the image forming device is provided with the storage means of image data, and image data stored in the storage means is managed from the client computer. Thus, it is possible to store and manage image data in the network without a network server indispensable in conventional cases. As a result, it is possible to prevent the network system from being made into a large scale, and to prevent an increase in build-up cost of the network system.
[2] In order to achieve the second object in addition to the first object, the system of the first aspect is preferably constructed such that the image forming device further includes a converter and a network interface; the storage means comprises a binary data storage section for storing image data as binary data and a text data storage section for storing text data converted from the binary data by the converter; and the network interface includes a software for managing the text data, and transmits the text data stored in the text data storage section to the client computer.
   Since the text data storage section for storing image data as text data is provided in addition to the binary data storage section for storing the image data as binary data in the storage means, the image data can be saved in two data formats. As a result, when inspecting character image data by the client computer, image data can be transmitted as text data. Therefore, when transferring character image data, it is possible to reduce a load acting on a network traffic, and to shorten time taken to transfer the image data.
   Further, since the network interface includes the software for managing text data, it is possible to readily transmit the text data to the client computer.
   In the case of printing out image data from the image forming device, it may be outputted as binary data. Therefore, it is possible to selectively use the data formats of image data according to the output medium.
[3] Moreover, in order to achieve the first object, according to a second aspect of the present invention, a method of managing image data in a network comprises the steps of: connecting at least one of an image input device and an image forming device to the network; connecting a client computer to the network; storing image data inputted by the image input device in storage means of the image forming device; and carrying out management of the image data stored in the storage means from the client computer via the network.
   The method permits the storage and management of image data in the network without a network server indispensable in conventional cases. As a result, it is possible to prevent the network system from being made into a large scale, and to prevent an increase in build-up cost of the network system.
[4] In order to achieve the second object in addition to the first object, when the image data is a character image, the character image is preferably stored in two data formats of binary data and text data, the text data being made by converting the binary data; and when inspecting the image data in the client computer, the text data is transferred to the client computer.

In such a method, when a user inspects character image data, the image data can be transmitted as text data. As a result, it is possible to reduce a load acting on a network traffic, and to shorten time taken to transfer the image data.
FIG. 1A is a block diagram showing the construction of a system of managing image data according to a first embodiment of the present invention.
   FIG. 1B is a block diagram showing a data flow in the system of FIG. 1A;
FIG. 2 is a block diagram showing the construction of a printer in the first embodiment;
FIG. 3A is a block diagram showing the construction of a system of managing image data in a network according to a second embodiment of the present invention.
   FIG. 3B is a block diagram showing the construction of a system of managing image data according to a third embodiment of the present invention.
FIG. 4A is a block diagram showing the construction of a conventional system of managing image data.
   FIG. 4B is a block diagram showing a data flow in the system of FIG. 4A.

The preferred embodiments of the present invention will be described below with reference to the accompanying drawings.

### [Embodiment 1]

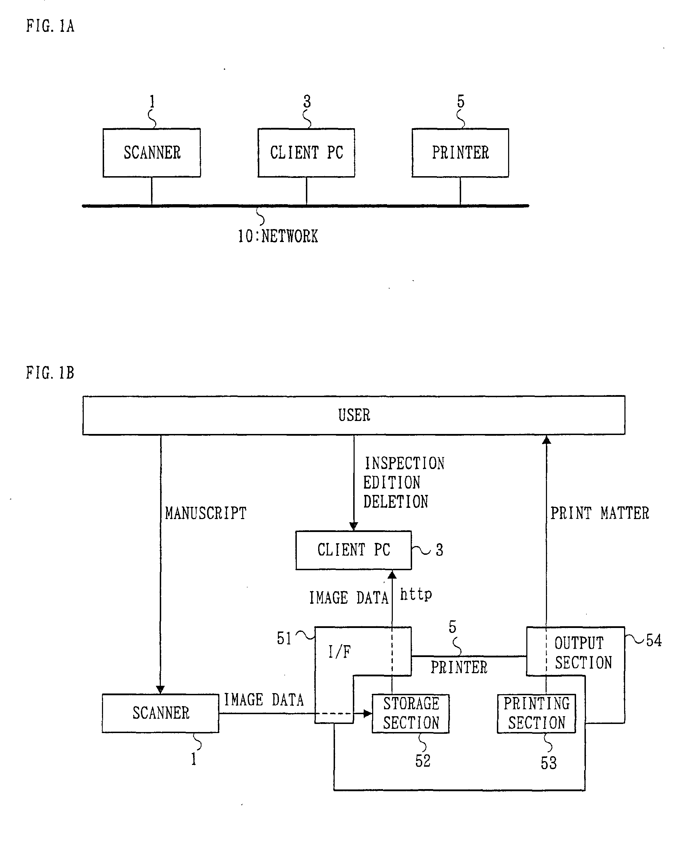

First, with reference to FIG. 1, a first embodiment of the present invention will be described below.

FIG. 1A is a block diagram showing the construction of a system of managing image data according to the first embodiment. Further, FIG. 1B is a block diagram showing a data flow in the system of FIG. 1A.

In the network system shown in FIG. 1A, a bus type LAN network 10 is connected with a scanner 1 as an image input device, a client computer (client PC) 3, and a printer as an image forming device. This network 10 is not connected with a network server.

In this case, for example, a network scanner can be used as a scanner 1.

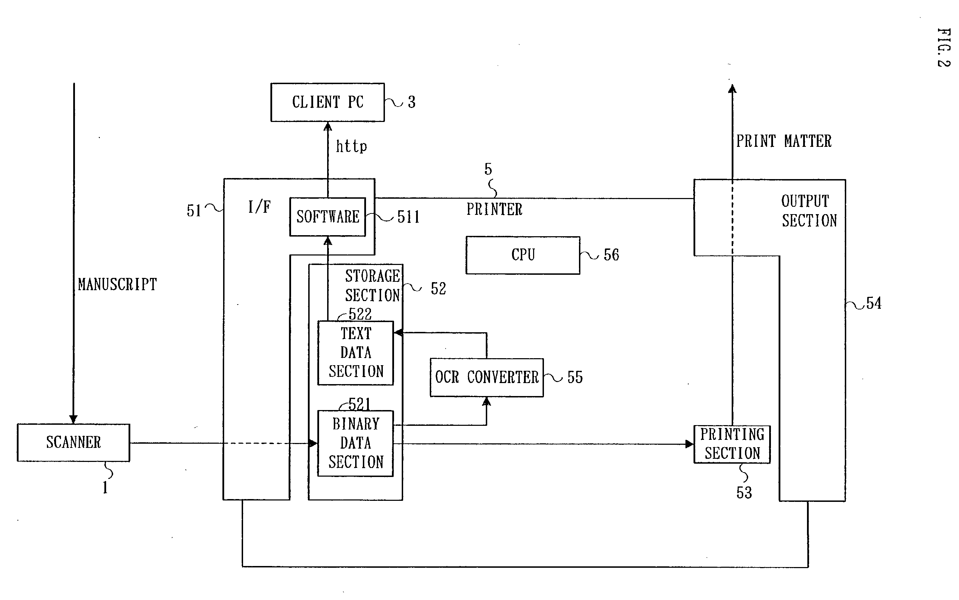

Further, with reference to FIG. 2, the construction of the printer 5 will be described below.

As shown in FIG. 2, the printer 5 includes a network interface (I/F) 51, a storage section 52, a printing section 53, an output section 54, an OCR converter 55, and a CPU 56 for controlling these sections.

The network interface 51 of this embodiment includes a NIC (Network Interface Card), which is one kind of LAN boards. The network interface 51 receives image data transmitted from the scanner 1 via the network, and then, transmits image data stored in the storage section 52 to the client computer 3 via the network. Moreover, in this embodiment, the network interface section 51 has a built-in software 511 for managing and inspecting image data in a HTML format.

The storage section 52 includes a hard disk. The storage section 52 is provided with a binary data section 521 for storing character image data as binary data such as a bit map, and a text data section 522 for storing image data as HTML format text data.

The text data section 522 stores text data into which binary data stored in the binary data section 521 is converted by the OCR converter. In the OCR converter, according to well-known technique, binary data of a character image is read by an optical character reader (OCR) so as to be converted into text data.

Moreover, the printing section 53 prints out binary data stored in the binary data section 521 via the output section 54.

The client computer 3 manages image data stored in the storage section 52 via the network 10. When making a management, a http access is made with respect to the printer 5 by using a browser.

In the embodiment, image data can be stored and managed without a network server conventionally required for storing the image data. As a result, the scale of the network system can be reduced with a decrease in build-up cost.

Next, with reference to FIG. 1B and FIG. 2, an image data management method of the present embodiment will be described below.

Image data scanned by the scanner 1 is transmitted to the printer 5 via the network. In the printer 5, the network interface 51 receives the transmitted image data. Further, the network interface 51 transmits the image data to the storage section 52 by instructions of the CPU 56. Since the data sent from the scanner 1 is image data, the image data is stored in the binary data section 521 of the storage section 52.

When image data is a character image, the CPU 56 converts the binary data stored in the binary data section 521 into a HTML format text data by the OCR converter 55. The converted text data is stored in the text data section 522 of the storage section 52. Thus, the character image data is saved in the storage section 52 in the two data formats of binary data and text data.

Image data stored in the storage section 52 is managed via the network 10 from the client computer 3.

When inspecting image data in the client computer 3, a http access is made with respect to the printer 5 by a browser of the client computer 3 via the network 10. The network interface 51 of the printer 5 reads the image data instructed by the client computer 3 out of the storage section 52, and then, transmits it to the client computer 3.

In particular, when instructed image data is a character image, the corresponding text data is read out of the text data section 522 of the storage section 52 by the software 511 for managing a HTML format image data, built in the network interface 51, and then, the text data is transmitted. As compared with the case of transferring binary data, it is possible to reduce a load acting on a network traffic, and to shorten time taken to transfer the image data.

Further, in the client computer 3, it is possible to carry out edition and deletion of image data while inspecting the image data.

Further, when a user instructs to print out image data stored in the storage section 52 from the client computer 3, the CPU 56 reads the image data to be printed out of the storage section 52, and then, transmits it to the printing section 53. The printing section 53 prints out the image data, and then, outputs it via the output section 54.

When the printing section 53 prints out data as binary data, in order to omit a process for re-converting the data from text data into binary data, the binary data is read out of the binary data section 521, and then, the binary data is printed out.

### [Embodiment 2]

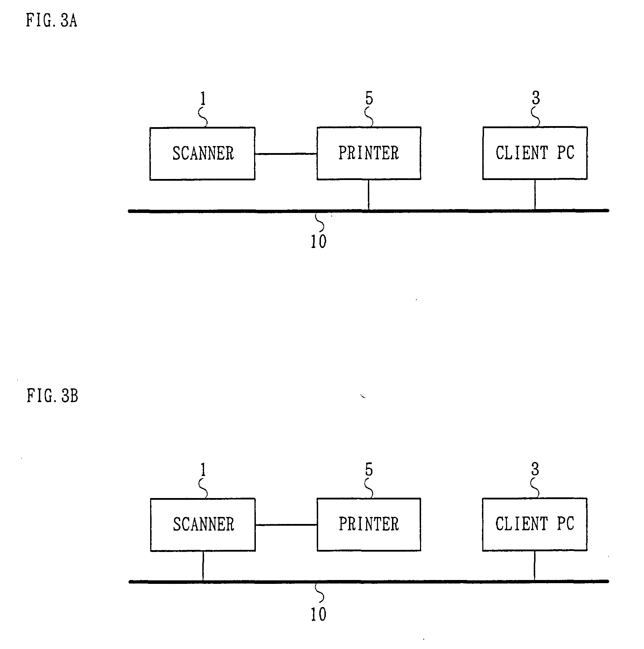

Next, with reference to FIG. 3A, a second embodiment of the present invention will be described below.

In the second embodiment, while a printer 5 is connected to a network 10, a scanner 1 is connected to the printer 5 but not connected directly to the network 10. In this case, for example, a scanner section of copier or MFP (Multi Function Printer) may be utilized as a scanner 1.

The printer 5 has the same constitution as the first embodiment shown in FIG. 2. In this case, the printer 5 includes an interface (not shown) for directly receiving image data from the scanner 1, in addition to a network interface.

In the system thus constructed, it is possible to transfer image data from the scanner 1 to the printer 5 without using the network 10. Therefore, the image data can be stored in a storage section of the printer 5 without giving a load to the network 10.

### [Embodiment 3]

Next, with reference to FIG. 3B, a third embodiment of the present invention will be described below.

In the third embodiment, while a scanner 1 is connected to a network 10, a printer 5 is connected directly to the scanner 1 but not connected directly to the network 10.

A network interface of the printer 5 makes an information exchange with the client computer 3 via the scanner 1. Therefore, in the above constitution, even if the printer 5 is not connected directly to the network 10, it is possible to readily manage image data stored in the storage section of the printer 5 by the client computer 3 via the scanner 1.

In the above embodiments, some constructions of the present invention under specific conditions have been described. However, various improvements, changes and modifications may be made within the scope of the present invention. For example, although one client computer is connected to a network in the above embodiments, a plurality of client computers may be connected to the network. In addition, image data stored in a printer may be managed by using each client computer.

Further, although the above embodiments relate to a system of managing image data in a bus type LAN network, the kind of network is not limited thereto. The present invention may be applicable to any suitable network such as a ring type LAN, a star type LAN or Internet.

Further, although a hard disk is provided as storage means of the image forming device in the above embodiments, the kind of the storage means is not limited thereto. Any suitable storage medium may be used.

The invention is based on Japanese Patent Application No. 2000-172931, which is hereby incorporated by reference.

It is to be understood that the invention is not limited to the above embodiments except as defined in the appended claims.

## Claims

1. A system of managing image data in a network (10), comprising:
an image input device (1);
an image forming device (5) including storage means (52) for storing image data inputted by the image input device (1), at least one of the image input device (1) and the image forming device (5) being connected to the network (10); and
a client computer (3), connected to the network (10), for managing the image data stored in the storage means (52) via the network (10).

2. The system according to claim 1, wherein the image forming device (5) further includes a converter (55) and a network interface (51);
the storage means (52) comprises a binary data storage section (521) for storing the image data as binary data and a text data storage section (522) for storing text data converted from the binary data by the converter (55); and
the network interface includes a software (511) for managing the text data, and transmits the text data stored in the text data storage section to the client computer.

3. A method of managing image data in a network (10), comprising the steps of:
connecting at least one of an image input device (1) and an image forming device (5) to the network (10); connecting a client computer (3) to the network (10);
storing image data inputted by the image input device (1) in storage means (52) of the image forming device (5); and
carrying out management of the image data stored in the storage means (52) from the client computer (3) via the network (10).

4. The method according to claim 3, wherein when the image data is a character image, the character image is stored in two data formats of binary data and text data, the text data being made by converting the binary data;
and when inspecting the image data in the client computer (3), the text data is transferred to the client computer (3).
